(19) Europäisches Patentamt
European Patent Office
Office européen des brevets

(11) Publication number: **0 196 114 A2**

# (12) EUROPEAN PATENT APPLICATION

(21) Application number: **86104418.8**

(22) Date of filing: **01.04.86**

(51) Int. Cl.[4]: **B 24 B 9/14**

(30) Priority: **29.03.85 JP 65695/85**

(43) Date of publication of application: **01.10.86**
**Bulletin 86/40**

(84) Designated Contracting States: **DE FR GB IT NL**

(71) Applicant: **TOKYO KOGAKU KIKAI KABUSHIKI KAISHA,**
***75-1, Hasunuma-cho Itabashi-ku, Tokyo (JP)***

(72) Inventor: **Hara, Atsushi, No. 1746-4, Kougasaka Machida-shi, Tokyo (JP)**
Inventor: **Isokawa, Nobuhiro, No. 217, Idanakano-machi Nakahara-ku, Kawasaki-shi Kanagawa-ken (JP)**
Inventor: **Suzuki, Yasuo, Kuki Skyheights 418 No. 1-15-73, Chuo, Kuki-shi Saitama-ken (JP)**
Inventor: **Hatano, Yoshiyuki, No. 1-26-12-205, Hasune, Itabashi-ku Tokyo (JP)**
Inventor: **Oogushi, Hiroaki, No. 2-20-17, Yaguchi Ohta-ku, Tokyo (JP)**

(74) Representative: **Rost, Jürgen, Dipl.-Ing. et al, Patentanwälte Dipl.-Ing. Olaf Ruschke Dipl.-Ing. Hans E. Ruschke Dipl.-Ing. Jürgen Rost Dipl.-Chem. Dr. U. Rotter Pienzenauerstrasse 2, D-8000 München 80 (DE)**

## (54) Lens grinding apparatus.

(57) A lens grinding apparatus comprising edge thickness measuring means for, in a photoelectrical and non-contact manner, measuring the edge thickness of the lens to be ground after completion of rough grinding, and a computing means for computing a predetermined position of the lens edge as a distance value from a predetermined movable origin in the direction of the axis of the lens shaft of the carriage on the basis of the data on the edge thickness obtained from the edge thickness measuring means, characterized in that the carriage is arranged to be capable of moving downwardly such that a predetermined position of the line of the edge surface of the lens agrees with the groove bottom of the V-shaped groove when bevel grinding is performed.

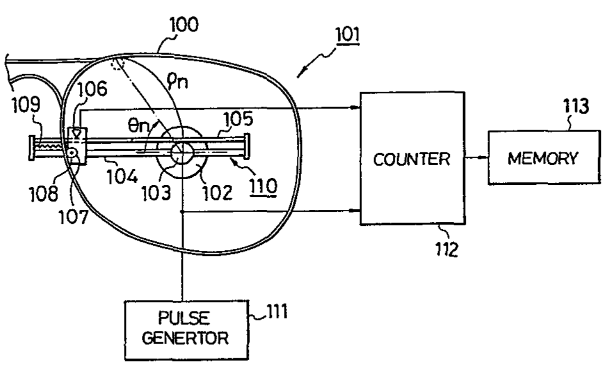


EP 0 196 114 A2

PATENTANWÄLTE
Dipl.-Ing. OLAF RUSCHKE
Dipl.-Ing. HANS E. RUSCHKE
Dipl.-Ing. JÜRGEN ROST
Dipl.-Chem. Dr. U. ROTTER
Pienzenauerstraße 2
8000 MÜNCHEN 80

0196114

1. April 1986

TITLE OF THE INVENTION

# LENS GRINDING APPARATUS

## BACKGROUND OF THE INVENTION

### Field of the Invention

The present invention relates to a lens grinding apparatus for grinding unworked spectacle lenses in conformity with the configuration of the lens frame of the spectacles in which they are to be fitted and, more particularly, to a lens grinding apparatus which is improved in connection with the formation of a beveled apex along a predetermined line on the edge surface around the periphery of the lens when bevel-grinding the lenses after completion of rough grinding for making the outer periphery of the spectacle lenses conform with the lens frame.

In a typical type of lens grinding apparatus, bevel-grinding has heretofore been performed on the edge surface after rough grinding of the same by using a concave-edged grinding wheel in order to shape the edge surface of each lens so that it will conform with the beveled grooves of the lens frame of the spectacles. In cases where the refractive power of a lens to be ground is 3 to 4 diopters or less, this bevel-grinding employs a method of so-called free grinding, namely, a bevel-grinding in which the movement of a carriage for holding the lens in the direction of the axis of a lens shaft is kept in a free state, and bevel formation is conducted while determining the relevant beveling positions in correspondence with the difference between the grinding pressures produced between the lens to be ground and the right and left sides of a V-shaped groove constituting the concave portion of a concave-edged grinding wheel. Specifically, in a bevel-grinding based on this free grinding, while a concave lens of generally 2 through 3 diopters is being ground, the carriage, as shown in Fig. 13A, transfers the roughly ground lens onto a concave-edged grinding wheel G in such a manner that an edge center line C substantially agrees with the groove bottom GB of the concave-edged grinding wheel G. Subsequently, the lens to be ground is moved down toward the concave-edged grinding wheel G.

In the prior-art lens grinding apparatus described above, when a lens to be ground is of the convex type, as shown by the two-dot chain line shown in Fig. 13A, the edge surface of the convex lens is offset rightwardly when the carriage is located in its downward position, and comes into contact with the inclined right hand surface of the V-shaped groove of the grinding wheel G, thereafter traveling toward the groove bottom GB.

In addition, even if the lens is a concave lens having a refractive power of 2 to 3 diopters, the position of the center of the edge surface greatly changes in the direction of the axis of the lens shaft with respect to each radius vector (a radius) when grinding the lens, namely, there are portions wherein the distance from the axis of rotation of the lens to a given point on the lens edge is large and other portions where the distance is small according to the configuration of each spectacle frame in which the lense are to be fitted. Therefore, the edge center C does not necessarily agree with the groove bottom GB, and additionally, the point at which the edge comes into contact with the concave-edged grinding wheel may be offset in one direction when the carriage is located in its downward position.

This offset of the edge surface disadvantageously causes cracks when the lens comes into contact with the concave-edged grinding wheel, and positional errors with respect to a bevel subsequently formed or of the curve of the bevel.

Also, the bevel-grinding upon which the prior art relies, in particular, the concave-type grinding for forming a bevel around the entire periphery of the edge surface, has adopted the above-described free grinding, wherein a beveled curve obtained, namely, a curve formed by a beveled apex is determined by grinding pressure between the lens edge and the surface of the grinding wheel. As an example, the prior art bevel grinding involves a disadvantage in that in a convex lens, the front beveled surface EF, as shown in Fig. 13B(I), is ground too much, or a portion having a large radius vector of the lens is partially bevel-ground. Specifically, in a large radius-vector portion, since the edge surface is largely offset in the direction of the optical axis of the lens, the magnitude of travel of the carriage must be large when performing the free grinding. However, since the mass of the carriage is large, the magnitude of travel cannot compensate for the magnitude of offset of the lens edge. Consequently, one side of the bevel is excessively ground, thereby causing a single bevel which only has one inclined surface, and furthermore, involving the disadvantage of flattening the curve of the bevel in large radius-vector portions.

## OBJECT OF THE INVENTION

It is therefore a first object of the present invention to provide a lens grinding apparatus in which the groove bottom of the V-shaped groove of a concave-edged grinding wheel can be made to agree with a desired position of a lens edge to be ground, for example, a position on the edge center line on commencing bevel grinding, in particular, a large concave-type bevel grinding.

A second object of the present invention is to provide a lens grinding apparatus in which the curve of a bevel to be ground can be known in advance.

A third object of the present invention is to provide a lens grinding apparatus which is capable of performing bevel grounding once the curve of the bevel is determined in such a manner that a beveled apex is located along a predetermined line on the edge surface around the entire periphery of the lens.

SUMMARY OF THE INVENTION

According to the present invention, the above and other objects can be accomplished by a lens grinding apparatus comprising a group of grinding wheels including coaxially a rough grinding wheel for grinding the outer periphery of a lens to be ground and a concave-edged grinding wheel for bevel-grinding the edge of said lens once its outer periphery has been ground; a carriage having lens shafts for holding said lens to be ground and lens-shaft rotating means for rotating said lens shafts axis-to-axis distance changing means for changing the distance between the axis of said lens shafts of said carriage and that of the rotating shaft of said group of grinding wheels; carriage moving means for causing said carriage to move in the axial direction of said lens shafts; edge thickness measuring means for measuring an edge thickness in a photoelectrical and non-contact manner in correspondence with a predetermined radius vector ($\rho_n$, $\theta_n$) of said lens to be ground once its outer periphery has been ground; a computing means for computing a predetermined position on said edge thickness as data on distance ($Z_i$, $Z_j$) from a predetermined movable origin ($Z_O$) of said carriage moving means on the basis of edge thickness data ($N_i + n - N_i$, $N_j + p - N_j$) obtained from said edge thickness measuring means; and a control means which, on the basis of the results obtained from the computation of said computing means (68), is capable of controlling said carriage moving means in such a manner that said predetermined position may agree with the groove on said concave-edged grinding wheel on commencing bevel grinding, thereafter executing said bevel-grinding.

The above and other objects and features of the present invention will become apparent from the following description of preferred embodiments with reference to the accompanying drawings.

BRIEF DESCRIPTION OF THE DRAWINGS

Fig. 1 is a block diagram of one example of the construction of the frame measuring device in accordance with the present invention;

Fig. 2 is a perspective view and block diagram of a first embodiment of the lens grinding apparatus of the present invention;

Fig. 3 is a longitudinal sectional view of one example of the construction of the sensor head incorporated into the edge center measuring device;

Fig. 4 is a sectional view taken along the line A - A' of Fig. 3;

Fig. 5 is a graph showing the waveform of the output from each component constituting the edge center measuring device;

Fig. 6A is a partially enlarged view showing the positional relationship between the lens and the concave-type grinding wheel;

Fig. 6B is a side elevational view of the edge surface of the lens to be bevel-ground;

Fig. 7 illustrates the relationship between the bevel curve R and each radius vector;

Fig. 8 illustrates a second preferred embodiment of the present invention;

Fig. 9 is a perspective view showing one example of the construction of the sensor head constituting the second embodiment;

Fig. 10 is an essential perspective view and block diagram of a third embodiment of the lens grinding apparatus of the present invention;

Fig. 11 is a transverse sectional view of the carriage portion showing a fourth embodiment of the present invention;

Fig. 12 is a longitudinal sectional view of the fourth embodiment shown in Fig. 11;

Fig. 13A illustrates the positional relationship between a lens edge and a concave-type grinding wheel upon which the prior art relies; and

Fig. 13B illustrates the edge surface of a lens which is bevel-ground by the prior art.

DESCRIPTION OF THE PREFERRED EMBODIMENTS

First Embodiment

Fig. 1 shows a frame-configuration measuring device 101 for measuring the configuration of a lens frame 100 of a desired spectacle frame, the device being employed to determine the final configuration of a lens to be ground which is to be fitted into the spectacle frame. The frame-configuration measuring device 101 has a sensor arm 110 which is mounted on a rotating shaft 103 of a pulse motor 102. The sensor arm 110 has an arm 104, a magnetic scale which is disposed in parallel with the arm 104, and a head 106 for reading out the magnetic scale 105 which is slideably mounted on the arm 104. In addition, the arm 110 is constituted by a movable member 108 which rotatably supports a contact ring 107 which is disposed on the member 108 such as to adjoin the interior of the lens groove of the lens frame 100 and a spring 109 which consistently pulls the movable member 108 toward one end of the sensor arm 110.

The rotational speed of the pulse motor 102 is controlled in response to the number of pulses generated by a pulse generator 111. The motor-controlling pulse from the pulse generator 111 is input to a counter 112 in which the angle of rotation of the sensor arm 110 $\theta_n$ (n = 1, 2, 3, ..., N) is obtained. Simultaneously, a lens-frame radius-vector value $\rho_n$ (n = 1, 2, 3, ..., N) supplied from the read-out head 106 is also counted by the counter 112, and the angle of rotation $\theta_n$ and the lens-frame radius-vector value $\rho_n$ are stored in a memory 113 as data on a polar coordinate ($\rho_n$, $\theta_n$) of a frame configuration.

Fig. 2 shows a perspective view of a grinding section of a first embodiment of the lens grinding apparatus of the present invention and a block diagram of its electric circuitry. A box 1 has a grinding-wheel chamber 2 which accommodates a circular grinding wheel 3 constituted by a rough grinding wheel 3a, a bevel grinding wheel, i.e., a concave-type grinding wheel 3b and an accurate plane grinding wheel 3c, and the grinding wheel 3 is mounted on a rotating shaft 5 having a pulley 4. The pulley 4 is coupled with the rotating shaft of a grinding motor 6 by a belt 7 in such a manner that the grinding wheel 3 is turned by the rotation of the grinding motor 6.

The box 1 has bearing 10 and 11, and a carriage shaft 12 is pivoted on the bearings 10 and 11 such as to be capable of sliding in the direction of the axis of the carriage shaft 12 itself. One end of the shaft 12 is rotatably fitted into a bearing 21a formed on a feed base 20 later described. Arms 14 and 15 of the carriage 13 are secured to the carriage shaft 12.

A lens shaft 18 for chucking and rotating a lens LE to be ground is pivoted on front end portions 16 and 17 of the arms 14 and 15. The other shaft 18a facing the lens shaft 18 has a chucking handle 19, and the operation of the handle 19 allows the shaft 18a to axially slide, so that the lens LE can be chucked. A pulse motor 33 is disposed within the carriage 13, and the motor 33 causes the rotation of a pulley shaft 35 having a gear 34, turning the lens shaft 18 through a pulley 31, a belt 32 and a pulley 30.

A wheel 22 is mounted on a base plate 21 of the feed base 20, and the wheel 22 is laid on a rail 23 projecting from the box 1 in such a manner that it can roll over the rail 22, whereby the feed base 20 is supported so as to be movable along the rail 23. An internally-threaded portion 24 of the feed base 20 is meshed with a feed screw 41 mounted on the rotating shaft of a motor 40, and the feed base 20 is moved rightwardly and leftwardly by the rotation of the motor 40 as indicated by an arrow 25.

The feed base 20, as described above, has the bearing 21a which receives the carriage shaft 12, and thus, as the feed base 20 moves rightwardly and leftwardly, the carriage 13 is correspondingly moved in the same direction. In addition, two paralled shafts 26 and 26' are secured in an implanted manner in the base 21 of the feed base 20, and a stopper member 27 is fitted onto the shafts 26 and 26' such as to be capable of moving upwardly and downwardly.

The stopper member 27 has an internally-threaded portion 28 which is meshed with a feed screw 43 secured to the rotating shaft of a stopper-feed motor 42. The stopper member 27 is arranged to be moved upwardly and downwardly by the rotation of the motor 42. The top surface of the stopper member 27 adjoins a rotating wheel 16b mounted on the end of an arm 16a downwardly projecting from one side of the carriage 13, and the carriage 13 is arranged to be swung in correspondence with the upward and downward motions of the stopper member 27.

A sensor head 50 of an edge-measuring device 60 is secured to one side portion of the grinding-wheel chamber 2 of the box 1. The sensor head 50, as shown in Figs. 3 and 4, is constituted by: an optical projection system having a light emitting diode 54 and a projection lens 52 for forming light rays emitting from the diode 54 on a predetermined point S as a point image; and an optical light receiving system having a light receiving diode 53 and a condenser lens 51 for converging through a diaphragm 55 on the light receiving diode 53 light rays diffusely reflected by the edge surface of the lense LE which is positioned at the point S.

The above-mentioned pulse motors 33, 40 and 42 and the grinding-wheel rotating motor 6 are driven by a motor driver 81. The motor driver 81 receives the pulses generated by a pulse generator 82, and serves as a gate circuit for determining how the pulses should be shared among the respective motors. The control of the motor driver 81 is executed in accordance with a predetermined program by a control circuit 80 constituted by a microprocessor and the like. A memory 113 of the above-described frame-configuration measuring device is connected to the control circuit 80.

The output side of the light receiving diode 53 of the detecting head 50 is connected to the edge measuring device 60. The edge measuring device 60 is constituted by an amplifier 61 for amplifying the output from the light receiving diode 53, a threshold circuit 62 for identifying the output from the amplifier 61 on the basis of its threshold value, a differentiating circuit 63 for differentiating the signal output from the circuit 62, a sample-hold circuit for holding a rise of the differentiated output, a sample-hold circuit 65 for holding a fall of the differentiated output, a counter circuit 66 for receiving the output from the sample-hold circuit 64, a counter circuit 67 for receiving the output from the sample-hold circuit 65, a computing circuit 68 for computing the center position or a predetermined position of the edge portion of a lens or on the basis on the values counted by both counter circuits 66 and 67, and a memory 69 which stores the results obtained by the circuit 68. The counter circuits 66 and 67 are connected to the pulse generator 82 such as to receive the output from the generator 82.

The results obtained from the computing circuit 68 are computed by a computing circuit 72 on the basis of angular data $_n$ on a radius vector stored in the memory 113 in accordance with equations later described, thereby computing a value of the bevel curve. The thus-obtained result is stored in a memory 71. A bevel curve computing means 70 is constituted by the computing circuit 72 and the memory 71.

The operation of the first embodiment will be described below.

(Rough Grinding Step)

The control circuit 80 causes the rotation of the grinding-wheel rotating motor 6 by means of the motor driver 81, thereby turning the grinding wheel 3 at high speed. The control circuit 80 reads a first item of radius-vector data ($\rho_1$, $\theta_1$) out of the lens-frame data ($\rho_n$, $\theta_n$) stored in the memory 113 of the frame-configuration measuring device, and controls the pulse generator 82 such as to deliver to the motor driver 81 the number of pulses corresponding to the angle of rotation $\theta_1$. The motor driver 81 rotates the motor 33 at a predetermined angle, and the lens LE to be ground is positioned at a predetermined angle.

Subsequently, the control circuit 80 causes the pulse generating circuit 82 to deliver to the motor driver 81 the number of pulses corresponding to the radius vector value $\rho_1$, and the motor 42 is rotated at a predetermined angle to move the stopper 27 downwardly. This motion moves the carriage 13 downwardly, and the lens LE is ground by the rough grinding wheel 3a. When the lens LE has been ground to the radius vector value $\rho_1$, the rotating wheel 16b adjoins the stopper 27, thereby preventing excessive grinding. Subsequently, the control circuit 80 reads a second item of radius-vector data ($\rho_2$, $\theta_2$) out of the memory 113, and the motors 33 and 42 are controlled on the basis of this data in the same manner as described above, thereby grinding the lens LE. In addition, grindings are repeated in a similar manner until lens grinding corresponding to the last item of radius-vector data ($\rho_n$, $\theta_n$) is carried out, thereby obtaining a roughly ground lens having the same configuration of the lens frame 100.

(Edge Measurement Step)

The control circuit 80 supplies a predetermined number of pulses to the motor 40 through the motor driver 81 so as to move the carriage 13 leftwardly, and the roughly-ground lens is positioned above the sensor head 50. The control circuit 80 then reads a predetermined piece of radius-vector data ($\rho_i$, $\theta_i$) out of the memory 113, and causes the rotation of the motor 33 on the basis of the thus-obtained data, thereby rotating the lens LE in such a manner that an image-formation point S of the optical light emitting system of the sensor head 50 is placed on a line extending in the direction of the angle of radius vector $\theta_i$. The motor 42 is driven to move the carriage 13 downwardly in such a manner that the axis of the lens rotating shaft 18 is positioned at a position ($\rho_i$ + R) which is the sum of a predetermined radius vector $\rho_i$ and a predetermined distance R from the sensor head 50 to the image-formation point S.

Subsequently, the control motor 80 supplies to the motor 40 the pulses generated by the pulse generating circuit 82 through the motor driver 81, and moves the carriage 13 in parallel with the lens rotating shaft 18. In synchronization with this movement, the edge measrung device 60 reads out the output from the light receiving diode 53 of the sensor head 50.

Fig. 5(A) is a graph of the waveform of the output of the light receiving diode 53 amplified by the amplifier 61. The horizontal axis represents the magnitude of travel of the carriage 13, i.e., the lens LE, and the vertical axis represents the output of the light receiving diode 53. The output signal obtained from the received light is filtered at a threshold of a predetermined output value e by the threshold circuit 62 and the output of a rectangular waveform shown in Fig. (B) is obtained. This threshold output is differentiated by the differentiating circuit 63 (Fig. 5(C)), and the rising signal is held by the sample-hold circuit 64 (Fig. 5(D)). The fall of the differentiated output is held by the sample-hold circuit 65 (Fig. 5(E)).

The counter circuits 66 and 67 receive the pulses generated from the pulse generating circuit 82, and the counter circuits 66 and 67 count the number of pulses from the time of commencement shown in Fig. 5. The counter circuit 66 completes pulse counting (Fig. 5(F)) in accordance with the rising signal of the sample-hold circuit 64, (Fig. 5(D)), and the nubmer $N_i$ of the pulses which have been accumulated is delivered to the computing circuit 68. On the other hand, the counter circuit 67 completes pulse counting in accordance with the rising signal of the sample-hold circuit 65 (Fig. 5(E)), and the number $(N_i + n)$ of the pulses which have been accumulated is delivered to the computing circuit 68 (Fig. 5(G)). The difference $(N_i + n - N_i)$ between the number of counted pulses $(N_i + n)$and the number $N_i$ of counted pulses corresponds to the edge thickness with respect to each radius vector $(\rho_i, \theta_i)$. The computing circuit 68, for example, computes the following equation

$$N_i + \left( \frac{(N_i + n - N_i)}{2} \right) = Z_i \quad \ldots \ (1)$$

Hence, the center line of the edge surface located on the axis of the lens rotating shaft 18 is determined as the number of pulses from the commencement position. The data on the edge center line is transferred to and stored in the memory 69.

The control circuit 80 reads a second item of radius-vector data ($\rho_j$, $\theta_j$) out of the memory 113, executing the same operation on as described above, and obtaining the positional data on the edge center line located on the axis of the lens rotating shaft 18 corresponding to the radius-vector data ($\rho_j$, $\theta_j$)

$$N_j + \left( \frac{(N_j + p - N_j)}{2} \right) = Z_j \quad \ldots (2)$$

The positional data on the edge center line obtained from the equation (2) is stored in the memory 69. The relationship between two items of radius-vector data ($\rho_i$, $\theta_i$) and ($\rho_j$, $\theta_j$), the positional data $Z_i$ and $Z_j$ on the edge center line and the curvature radius R of the bevel curve, as shown in Fig. 7, is given by the following simultaneous equations

$$\begin{cases} \rho_i 2 + (Z_0 - Z_i)^2 = R^2 \\ \rho_j 2 + (Z_0 - Z_j)^2 = R^2 \end{cases} \quad \ldots (3)$$

The equation (3) is solved by the computing circuit 72 and the curvature radius R of the bevel curve is thus obtained. In this case, if two simultaneous equations or more are obtained, the curvature radius R which seems to be the most accurate is found and the following computation is executed by using the thus-obtained R. When the curvature radius R of the bevel curve is determined, the edge center position $Z_n$ corresponding

to each of the radius-vector data ($\rho_n$, $\theta_n$) (n = 1, 2, 3, ..., N) conversely is as follows if a position where a given beveled apex is located on the axis is $Z_R$

$$Z_n = Z_R + R - \sqrt{R^2 - \rho_n^2} \qquad \ldots (4)$$

(where n = 1, 2, 3, ..., N) Hence, the position where the end point of each radius vector is located on the axis of the lens rotating shaft, that is, positional data on the edge center line corresponding to each radius vector is obtained. The above equations (3) and (4) are computed by the computing circuit 72, and positional data on the edge center line corresponding to each radius vector is stored in the memory 71.

(Bevel Grinding Step)

The above described circuit 80 reads the positional data $Z_j$ on the edge center line corresponding to each radius-vector data ($\rho_j$, $\theta_j$) out of the memory 71. After the motor 40 has been driven by using pulses so as to locate the lens LE at the position designated by the $Z_j$, the motor 42 is actuated to move the carriage 13 downwardly in such a manner that the groove bottom GB of the concave-type grinding wheel 36 is spaced from the axis of the lens rotating shaft 18 by a distance of the radius vector $\rho_j$, thereby effecting bevel grinding (Fig. 6A). After completion of the bevel grinding corresponding to the radius-vector data ($\rho_j$, $\theta_j$), the control circuit 80 reads another data on the radius vector ($\rho_j$ + 1, $\theta_j$

+ 1) out of the memory 113, and simultaneously, a corresponding positional data on the edge center line ($Z_j + 1$) out of the memory 71. The motors 33, 40 and 42 are controlled on the basis of the thus-obtained data, thereby effecting bevel grinding. Subsequently, in the same manner as described above, bevel grinding are carried out in correspondence with each datum on the radius vectors such as

$\{(\rho_j + 2, \theta_j + 2)\ Z_j + 2\}$,

$\{(\rho_j + 3, \theta_j + 3)\ Z_j + 3\}$, ...,

$\{(\rho_N, \theta_N), Z_N\}$, $\{(\rho_1, \theta_1), Z_1\}$, $\{(\rho_2, \theta_2), Z_2\}$,

... $\{(\rho_j - 1, \theta_j - 1)\ Z_j - 1\}$

and bevel grinding of the entire outer periphery of the lens LE is completed. In this manner, as shown in Fig. 6B, the beveled apex can be formed in the edge center with respect to all radius vectors.

While the denominator for dividing the edge thickness ($N_i + n - N_i$) is chosen as "2" in the above-described equations (1), (2) in order to position the beveled apex on the edge center line in the first embodiment, the present invention is not limited to this. Specifically, if the beveled apex is to be formed not on the edge center line but at another predetermined position, for example, at a position where the edge thickness may be divided in the ratio of 4:6, the equation (1) becomes

$$N_i + \left( \frac{4(N_i + n - N_i)}{10} \right) = Z_i \quad \ldots \ (1)'$$

In general, it will be readily understood that, if the beveled apex is to be formed at a position where the edge thickness is divided in the ratio a:b, the following equation (1)" can be obtained according to the equation (1)'

$$N_i + \left( \frac{a(N_i + n - N_i)}{a + b} \right) = Z_i \quad \ldots \quad (1)''$$

From the equation (2), it follows that

$$N_j + \left( \frac{a(N_j + n - N_j)}{a + b} \right) = Z_j \quad \ldots \quad (2)''$$

In addition, a given ratio a:b does not have to be identical with respect to all radius vectors $(\rho_n, \theta_n)$. According to the number of counted pulses $N_i$ and $N_i + n$ obtained from the counter circuits 66, 67, the edge thickness $\Delta_i = N_i + n - N_i$ is obtained in correspondence with each radius vector i (i = 1, 2, 3, ..., N), and on the basis of these edge thickness data $\Delta_i$, the maximum edge thickness "$\Delta$ max" and the minimum edge thickness "$\Delta$ min" are chosen. Regarding the minimum edge thickness "$\Delta$ min", the edge center position is obtained according to the equation (1), and regarding the maximum edge thickness "$\Delta$ max", a position based on a given ratio a:b is obtained by using the equation (1)". On the basis of both results, the curvature radius R of the bevel curve may be obtained according to the equation (3).

<u>Second Embodiment</u>

Figs. 8 and 9 show the second embodiment of the sensor head incorporated into the edge center position detecting device of the present invention, in which like or corresponding constituent elements in the first embodiment are indicated by identical reference numberals for the sake of simplicity. The second preferred embodiment is characterized in that the sensor head 50 itself is disposed such as to be capable of moving in the vicinity of the edge of the lens LE to be ground once it has been roughly ground.

The box 1 has an arm 201 which is pivotable on a fulcrum 200. A pedestal 202 of a triangular prism shape, as shown in Fig. 9, is secured to one end of the arm 201, and an edge 202a is disposed so as to adjoin the edge surface of the lens LE. A side surface 202b which is opposite to the edge 202a has bearings 203a, 203b (not shown).

A guide shaft 204 passes through the sensor head 50 which is slideably disposed on the side surface 202b of the pedestal 202, and is supported at both ends by the bearings 203a, 202b. A feed screw 205 is screwed into the internally-threaded portion formed in the sensor head 50, and is supported by the bearings 203a, 203b. The feed screw 205 is rotated by a pulse motor 206 mounted on the bearing 203b, so that the sensor head 50 travels over the pedestal 202 in parallel with the lens rotating shaft 18 of the carriage 13. The pulse motor 206 is controlled and driven by the motor driver 81 of the first embodiment.

In the second embodiment, while the lens LE is being roughly ground, the sensor head 50 is withdrawn on the side of the box 1 by the motion of the arm 201 pivoted on the fulcrum 200, thereby preventing the sensor head 50 from being fouled by grinding fluid. When the carriage 13 travels and stops at an edge detecting position after completion of rough grinding, the arm 201 is pivoted to make the edge 202a of the pedestal 202 adjoin the edge surface of the lens LE. Consequently, the image-formation point S is focused on the edge position by the lens 52 of the light emitting diode 54 of the optical projection system of the sensor head 50. Subsequently, the edge center position and the bevel curve are measured in the same manner as the step of measuring the edge center position constituting the above-described first embodiment. However, the second embodiment differs in that the motor 206 is substituted for the motor 40 of the first embodiment.

Third Embodiment

While, in the above-described first and second embodiments, the lens LE is ground on the basis of each radius vector data ($\rho_n$, $\theta_n$) of the frame-configuration measuring device, the third embodiment discloses a lens grinding apparatus based on profile working using a template which is formed in advance in the shape of the lens frame of spectacles. In addition, although in the first and second embodiments a forced bevel grinding is performed in accordance with the bevel curve which is obtained by the bevel curve measuring device upon bevel grinding, the third embodiment is arranged in such a manner as to perform free grinding.

Referring to Fig. 10, an arm 16a at the lower end portion has a rod 16b which adjoins the cam surface of an eccentric cam 301. A worm gear 302 is coaxially mounted on the rotating shaft of the eccentric cam 301, and the gear 302 is meshed with a worm gear 303 which is mounted on the rotating shaft of the motor 42, whereby the distance between the axis of the lens rotating shaft 18 of the carriage 13 and that of the grinding wheel 3 is controlled in accordance with the rotational speed of the motor 42 in the same manner as the first embodiment.

A template 310 which is subjected to profile working in accordance with the configuraiton of a lens frame is mounted by a mounting screw 312 on one end of an extension shaft 311 of the lens rotating shaft 18. While the lens LE is being ground, the template 310 is capable of adjoining a known template detecting device 313 which has an adjoining portion 313a and a built-in microswitch (not shown). The template detecting device 313 is moved upwardly and downwardly by a motor 314 and a feed screw 315. The carriage 13 is horizontally moved over the shaft 12 by a motor 40, a drive pulley 320 which is rotated by the motor 40, a follower pulley 321 and a wire 323 passing around both pulleys.

The grinding operation of the lens LE by the third embodiment constructed above is as following. Specifically, when the lens LE is to be ground into a size identical with the template, the apex of the rough grinding wheel 3a is made flush with that of the adjoining portion 313a of the template detecting device 313. When the lens LE is to be ground into a size larger than the template, the detecting device 313 is moved upwardly, while when it is to be ground into a size smaller than the template, the detecting device 313 is moved downwardly. The upward and downwards movement of the detecting device 313 is executed by the rotation of the motor 314 through the motor driver 81 in accordance with the command of the control circuit 80.

After the lens LE has been positioned on the grinding wheel 3a by the rotation of the motor 40, the motor 42 is rotated to move the carriage 13 downwardly, thereby grinding the lens LE. At this time, the lens LE is rotated about the lens shaft 18 by rotating the motor 33. When the control circuit 80 detects the fact that microswitch of the detecting device 313 has transmitted an "ON" signal, i.e., a signal representing the state wherein the template adjoins the adjoining portion 313a with respect to the entire outer periphery of the lens LE, it judges that rough grinding has been completed, and reverse the motor 42 to move the carriage 13 upwardly. Additionally, the motor 40 is rotated at a predetermined angle so as to move the lens LE above the sensor head 50, and the lens LE is then stopped at a radius-vector position of a predetermined angle by controlling the motor 33.

Subsequently, the measurement of the edge center position after rough grinding is performed in the same manner as the first embodiment. However, in the third embodiment, not the bevel curve but the edge center position alone is measured in correspondence with a certain radius vector. On the basis of the positional data on the edge center line, the motor 40 is actuated in such a manner that the edge center agrees with the groove bottom GB of the concave-type grinding wheel (Fig. 6A), and the carriage 13 is then moved downwardly so as to start bevel grinding.

Fourth Embodiment

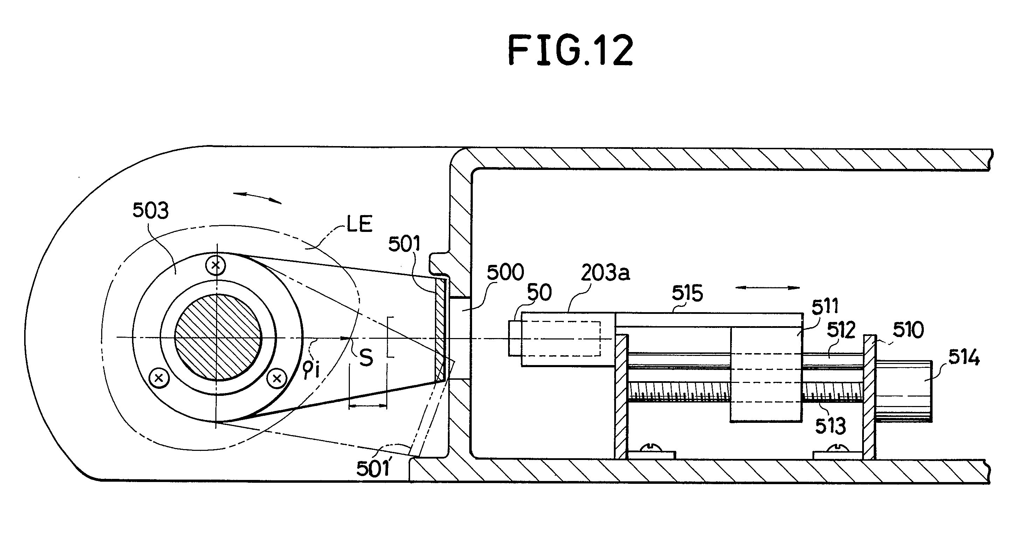

Figs. 11 and 12 shown the fourth embodiment of the present invention, illustrating an example in which the sensor head 50 of the edge measuring device 60 is housed within the carriage 13. In the fourth embodiment, like reference characters are used for the sake of simplicity to denote like or corresponding elements which constitute each of the components shown in the above-described first and second embodiments.

An opening 500 is formed in the center of the carriage 13. The opening 500, as shown in Fig. 12, is in interlocking relationship with the rotation of the lens rotating shafts 18, 18a, and is closed and opened by a cover member 501 which is secured to a ring 503 fitted onto the lens rotating shaft 18a with an O ring 502 interposed therebetween.

In the interior of the carriage 13, are housed a guide shaft 512 which is held by a base 510, a feed screw 510, and a pulse motor 514 for rotating the feed screw 513. The pulse motor 514 is connected to the driver circuit 81 and is controlled by the control circuit 80.

The guide shaft 512 supports a pedestal 511, the feed screw 513 is screwed into the internally-threaded portion of the pedestal 511, and the rotation of the guide shaft 512 moves the pedestal 511 in the direction of an arrow 520. An arm member 515 is mounted on top of the pedestal 511, and the sensor head 50 is incorporated into one end of the pedestal 511 in accordance with substantially the same construction as that of the second embodiment.

After completion of rough grinding, the cover 501 leaves the opening 500 as the lens rotating shafts 18, 18a are being rotated, and the opening 500 is opened. On the basis of radius-vector data ($\rho_n$, $\theta_n$) supplied by the frame-configuration measuring device, the control circuit 80 controls the rotation of the motor 514 and moves the pedestal 511 such that the optical projection system of the sensor head 50 may focus a light image on the position ($\rho_i$ + R) which is the sum of the radius vector $\rho_i$ of the lens LE and a predetermined distance R. Subsequently, in the same manner as the second embodiment, the motor 206 is rotated to scan the detecting head 50.

In accordance with the fourth embodiment, while not engaged in measuring, the sensor head 50 is withdrawn into the carriage, thereby avoiding any risk of the sensor head 50 being fouled by grinding fluid. A further advantage is afforded in that edge measurement can be performed no matter where the carriage may be positioned. Moreover, the aesthetic appearance of the apparatus is not spoiled by the sensor head.

The lens grinding apparatus constructed above possesses advantage in that on commencing bevel grinding, the carriage, that is, a lens to be ground, can be moved downwardly to adjoin the groove of the concave-edged grinding wheel so that a predetermined position of the lens edge can consistently agree with the groove bottom of the concave-edged grinding wheel, whereby even if all sides of the edge portion are not kept in contact with the grinding surfaces of the concave-edged grinding wheel under equal pressure when a lens having a particularly large curvature must be ground, offset bevel grinding can be prevented.

In addition, if the lens edge is subjected to a forced bevel grinding in which bevel grinding is controlled in conformity with a bevel curve which is previously examined, a beveled apex can be formed along a predetermined line of the edge portion around the entire periphery of the lens such as the edge center line.

It should be understood that while the invention has been described with respect to preferred embodiments, variations may be perceived by those skill in the art while nevertheless not departing from the scope of the present invention as described by the claims appended hereto.

CLAIMS

1. A lens grinding apparatus comprising:

a group of grinding wheels (3) including coaxially a rough grinding wheel (3a) for grinding the outer periphery of a lens (LE) to be ground and a concave-edged grinding wheel (3b) for bevel-grinding the edge of said lens (LE) once its outer periphery has been ground;

a carriage (13) having lens shafts (18, 18a) for holding said lens (LE) to be ground and lens-shaft rotating means (30 to 33) for rotating said lens shafts (18, 18a);

axis-to-axis distance changing means (42, 43, and 301 to 303) for changing the distance between the axis of said lens shafts (18, 18a) of said carriage (13) and that of the rotating shaft of said group of grinding wheels (3);

carriage moving means (24, 41, 42, and 320 to 323) for causing said carriage (13) to move in the axial direction of said lens shafts (18, 18a);

characterized in that said lens grinding apparatus further comprises edge thickness measuring means (50, 60) for measuring an edge thickness in a photoelectrical and non-contact manner in correspondence with a predetermined radius vector ($\rho_n$, $\theta_n$) of said lens (LE) to be ground once its outer periphery has been ground;

a computing means (68) for computing a predetermined position on said edge thickness as data on distance ($Z_i$, $Z_j$) from a predetermined movable origin ($Z_o$) of said carriage moving means (24, 41, 42, and 320 to 323) on the basis of edge

thickness data ($N_i + n - N_i$, $N_j + p - N_j$) obtained from said edge thickness measuring means; and

a control means (80) which, on the basis of the results obtained from the computation of said computing means (68), is capable of controlling said carriage moving means (24, 41, 42, and 320 to 323) in such a manner that said predetermined position may agree with the groove (GB) on said concave-edged grinding wheel (3b) on commencing bevel grinding, thereafter executing said bevel-grinding.

2. A lens grinding apparatus according to Claim 1, wherein said edge thickness measuring means (50, 60) comprises light emitting means (52, 54) for projecting light rays onto the edge surface of said lens (LE) and light receiving means (51, 53) for detecting the quantity of said light rays reflected from said edge surface of said lens (LE).

3. A lens grinding apparatus according to either of Claims 1 or 2, wherein said edge thickness measuring means (50, 60) comprises a beveled-curve computing means (68) for computing a beveled curve (R) on the basis of data on predetermined positions obtainerd from measurement connected with at least two radius vectors ($\rho_i \theta_i$, $\rho_j \theta_j$) with respect to a predetermined position on said edge thickness.

4. A lens grinding apparatus according to any one of Claims 1 through 3, wherein said edge thickness measuring means (50) is housed in said carriage (13).

5. A lens grinding apparatus according to any one of Claims 1 through 4, wherein said predetermined position on said edge thickness constitutes the center of said edge thickness.

FIG. 1

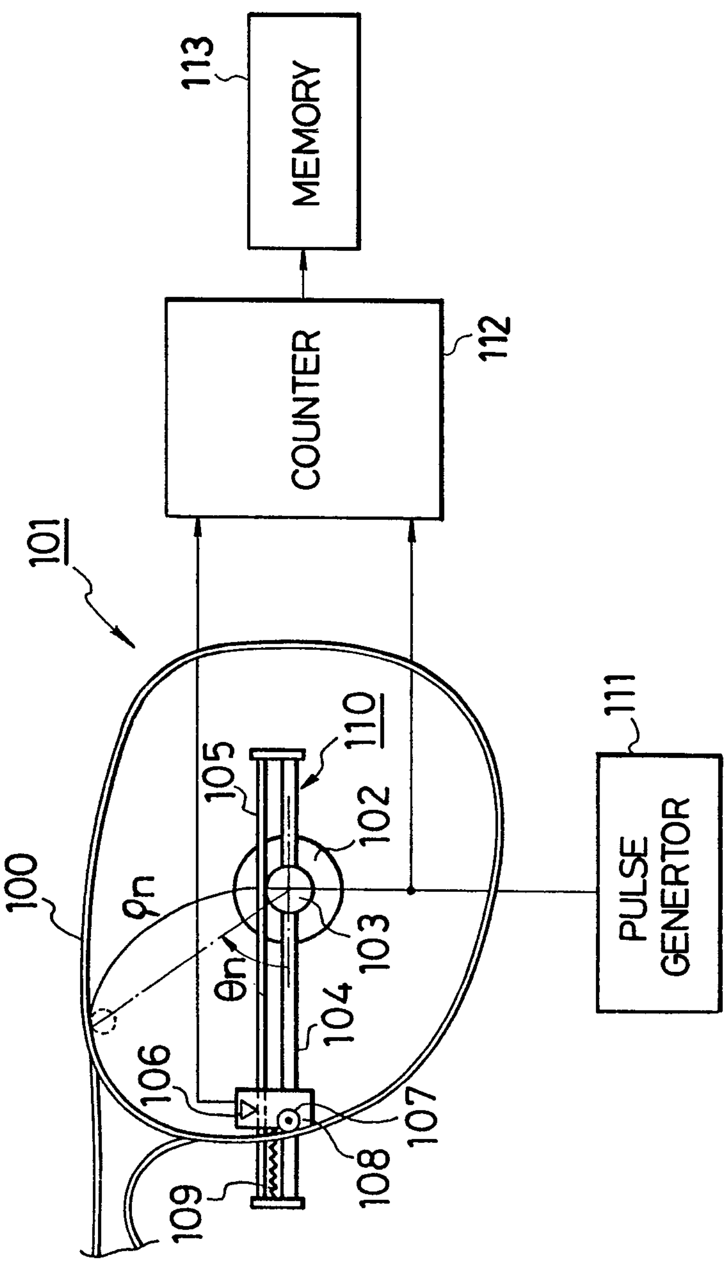
MEMORY
113
COUNTER
112
101
PULSE GENERTOR
111
100
110
105
102
103
104
106
107
108
109
ρn
θn

FIG. 2

| | |
|---|---|
| FIG.2A | FIG.2B |

FIG. 2A

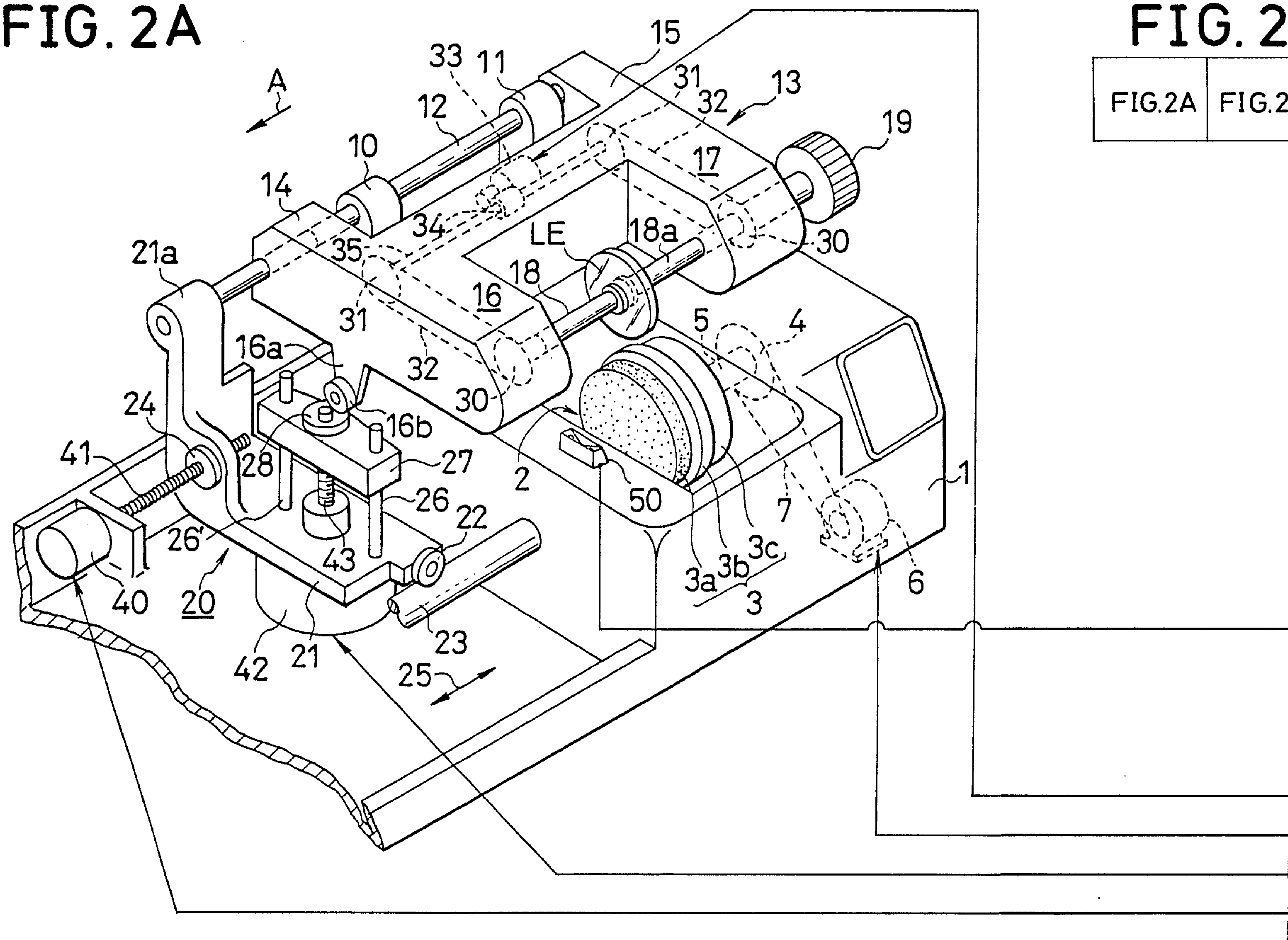

FIG. 2B

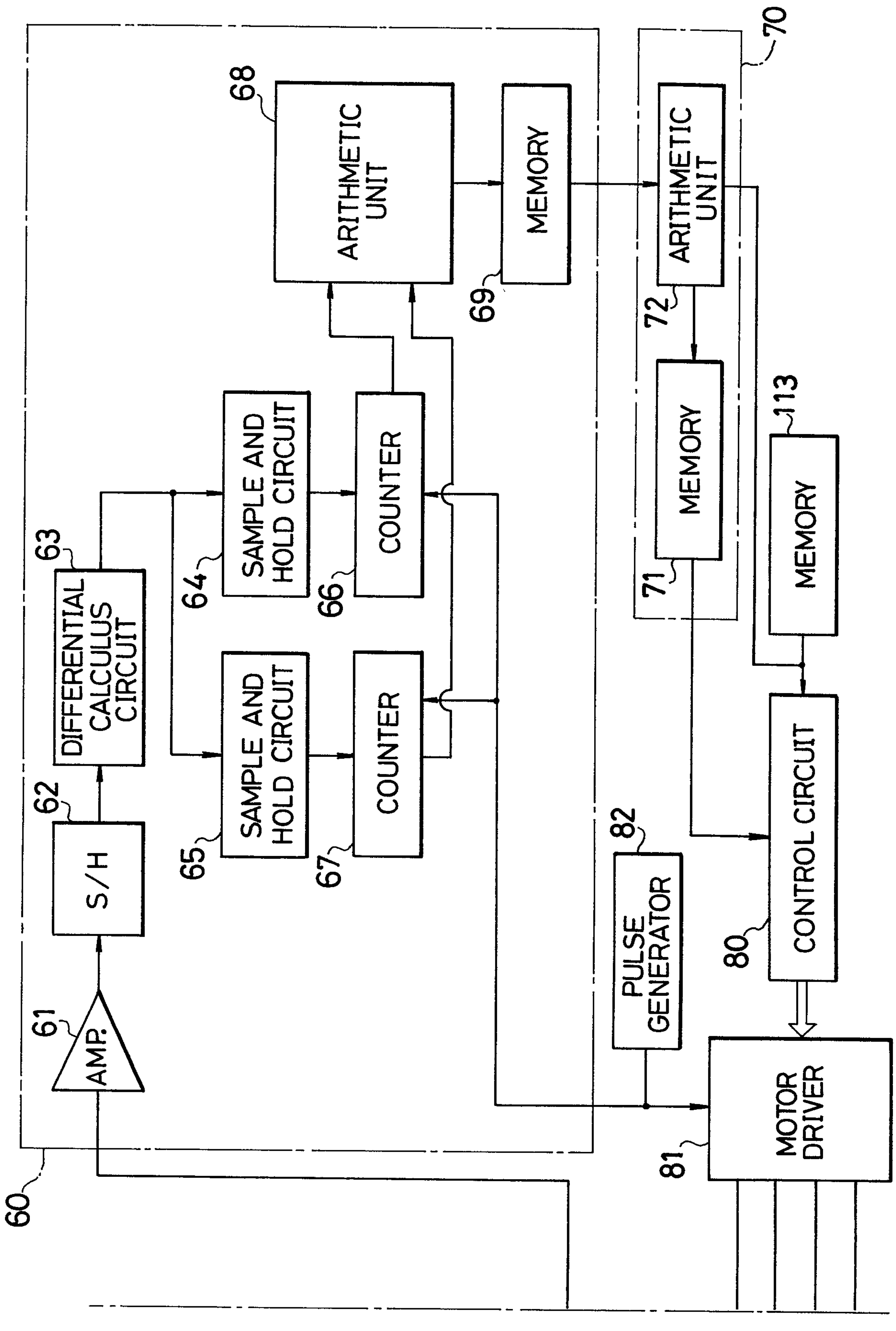
60
61
AMP.
62
S/H
63
DIFFERENTIAL CALCULUS CIRCUIT
64
SAMPLE AND HOLD CIRCUIT
65
SAMPLE AND HOLD CIRCUIT
66
COUNTER
67
COUNTER
68
ARITHMETIC UNIT
69
MEMORY
70
71
MEMORY
72
ARITHMETIC UNIT
113
MEMORY
80
CONTROL CIRCUIT
81
MOTOR DRIVER
82
PULSE GENERATOR

FIG. 3

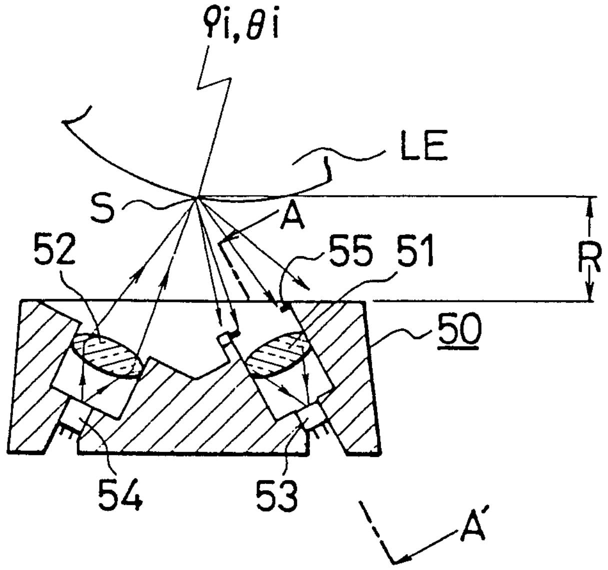


FIG. 4

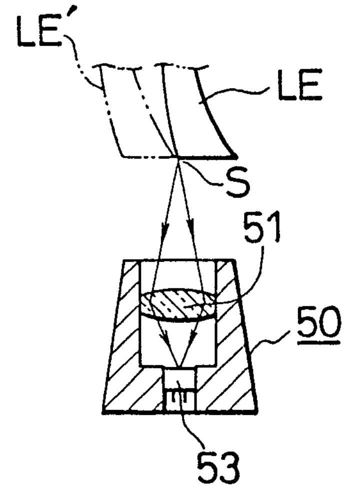

FIG. 5

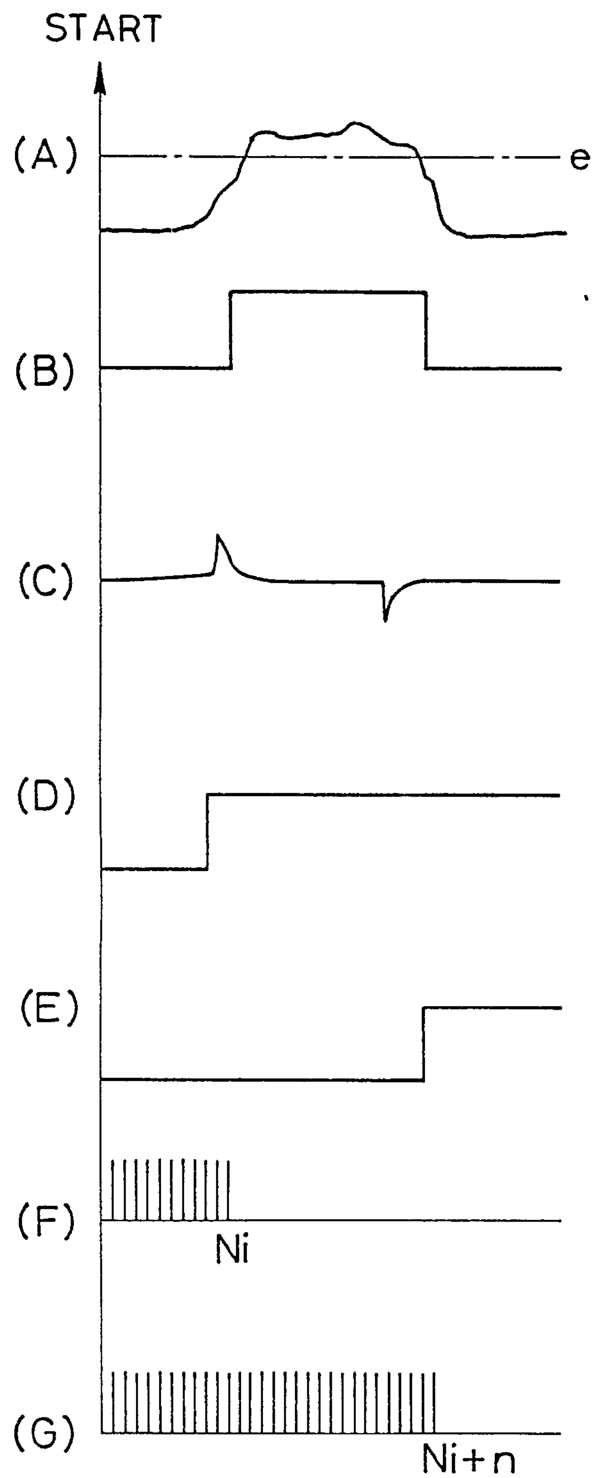

FIG.6 A

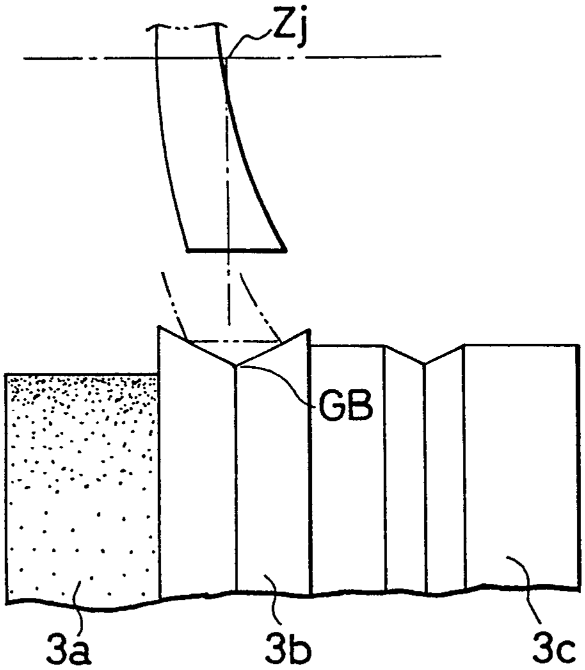


FIG.6 B

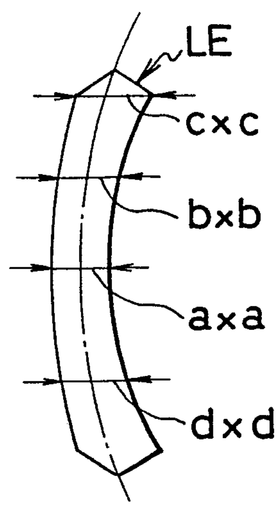

FIG. 7

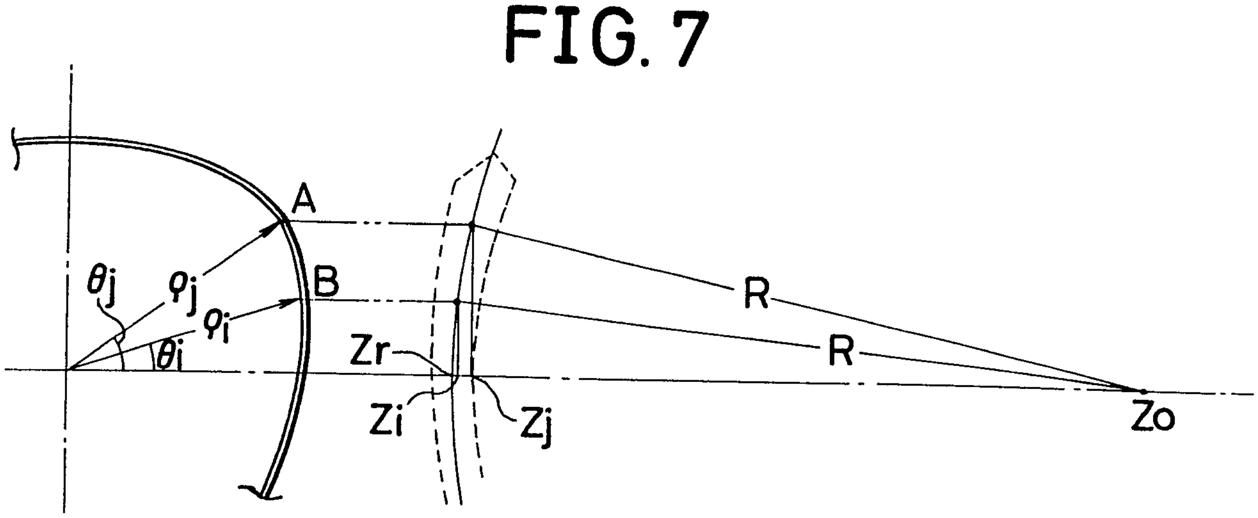


FIG. 8

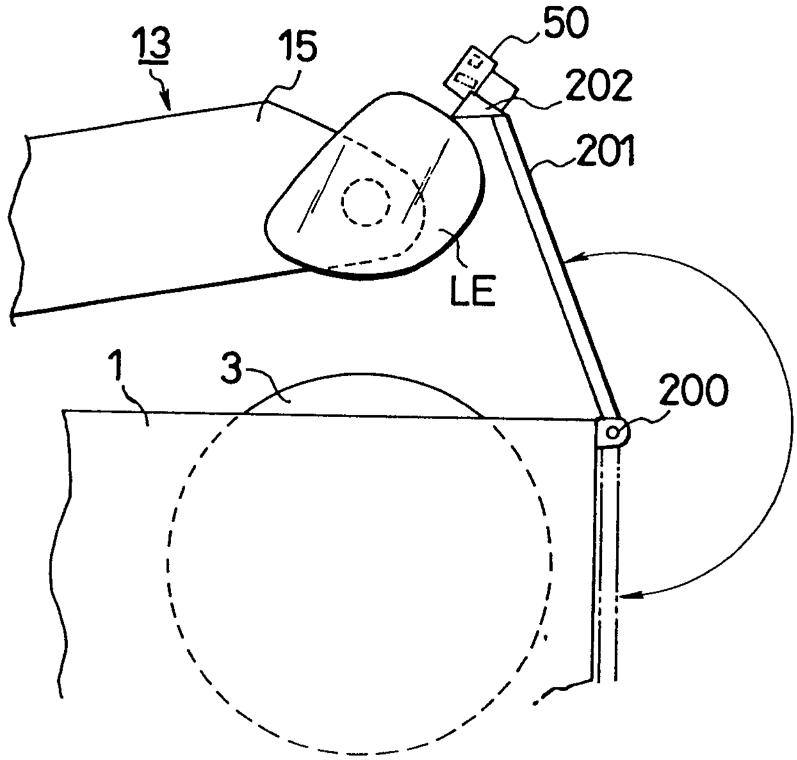

FIG. 9

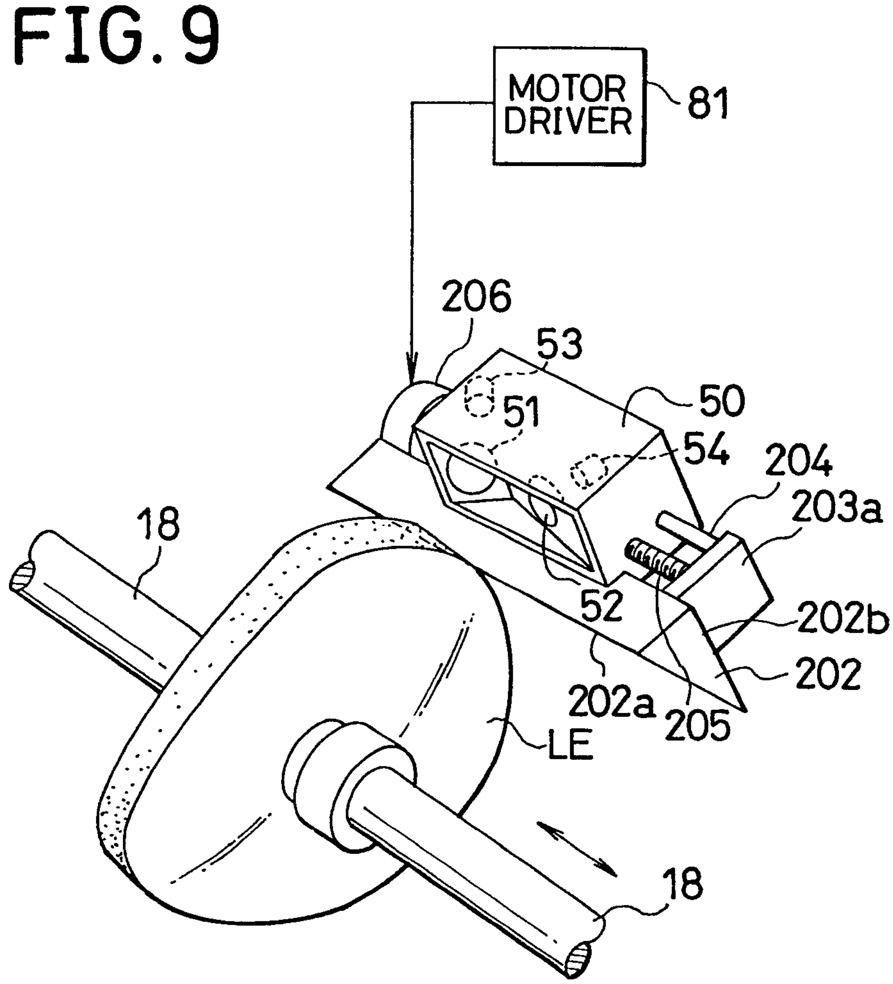


FIG.13 A

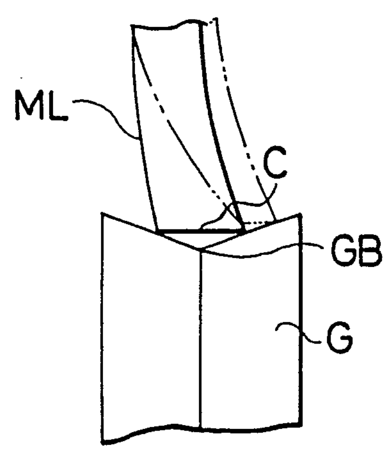


FIG.13 B

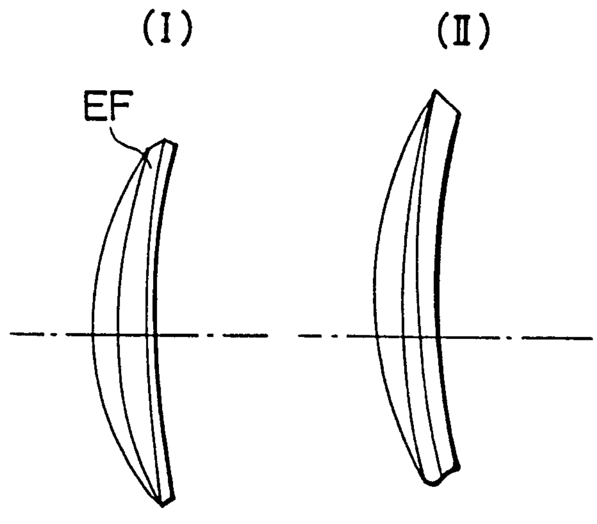

FIG.10

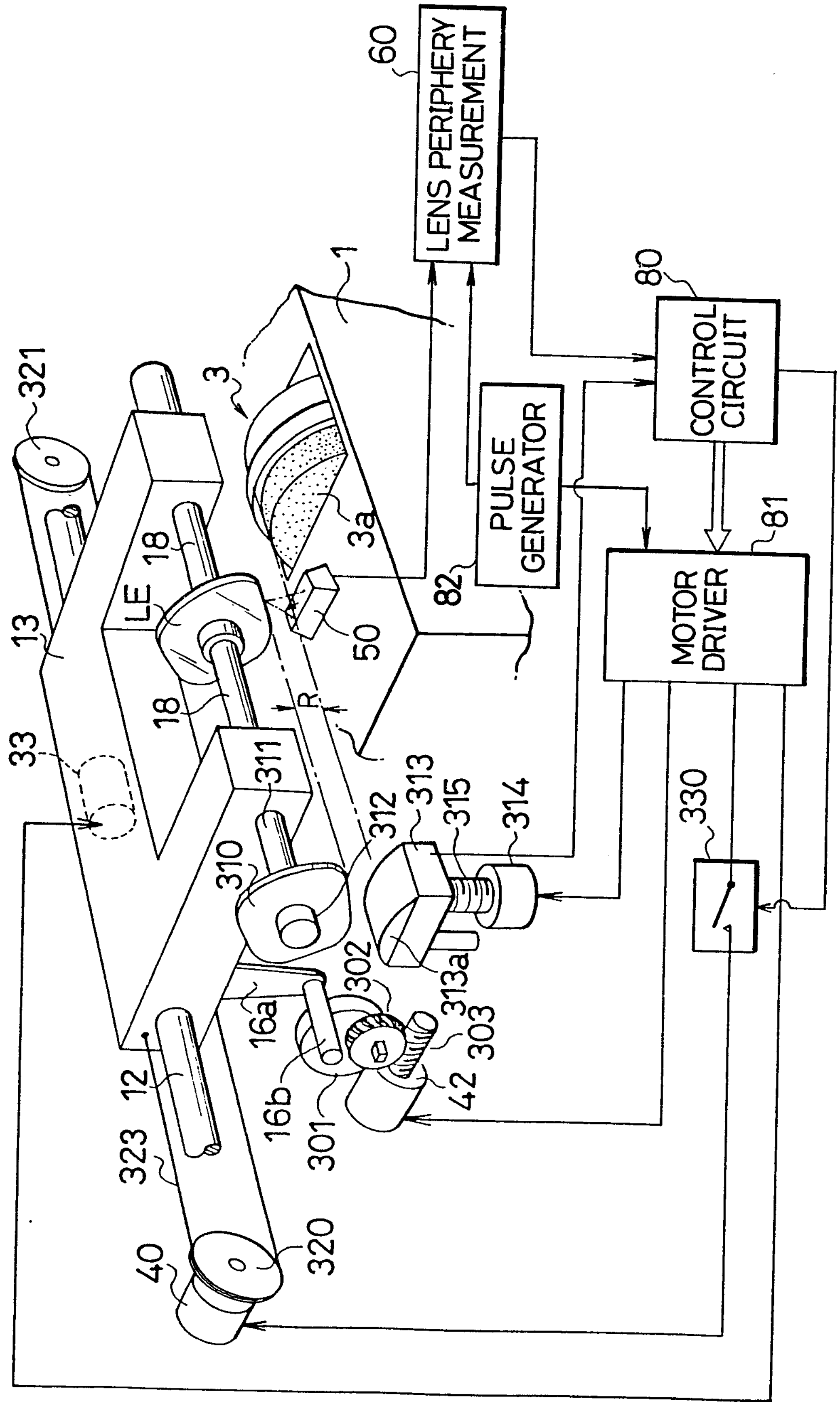

LENS PERIPHERY MEASUREMENT
60
CONTROL CIRCUIT
80
PULSE GENERATOR
82
MOTOR DRIVER
81
330
1
3
3a
321
13
18
LE
50
R
33
311
312
313
315
314
310
313a
302
303
16a
42
12
16b
301
323
320
40

FIG.11

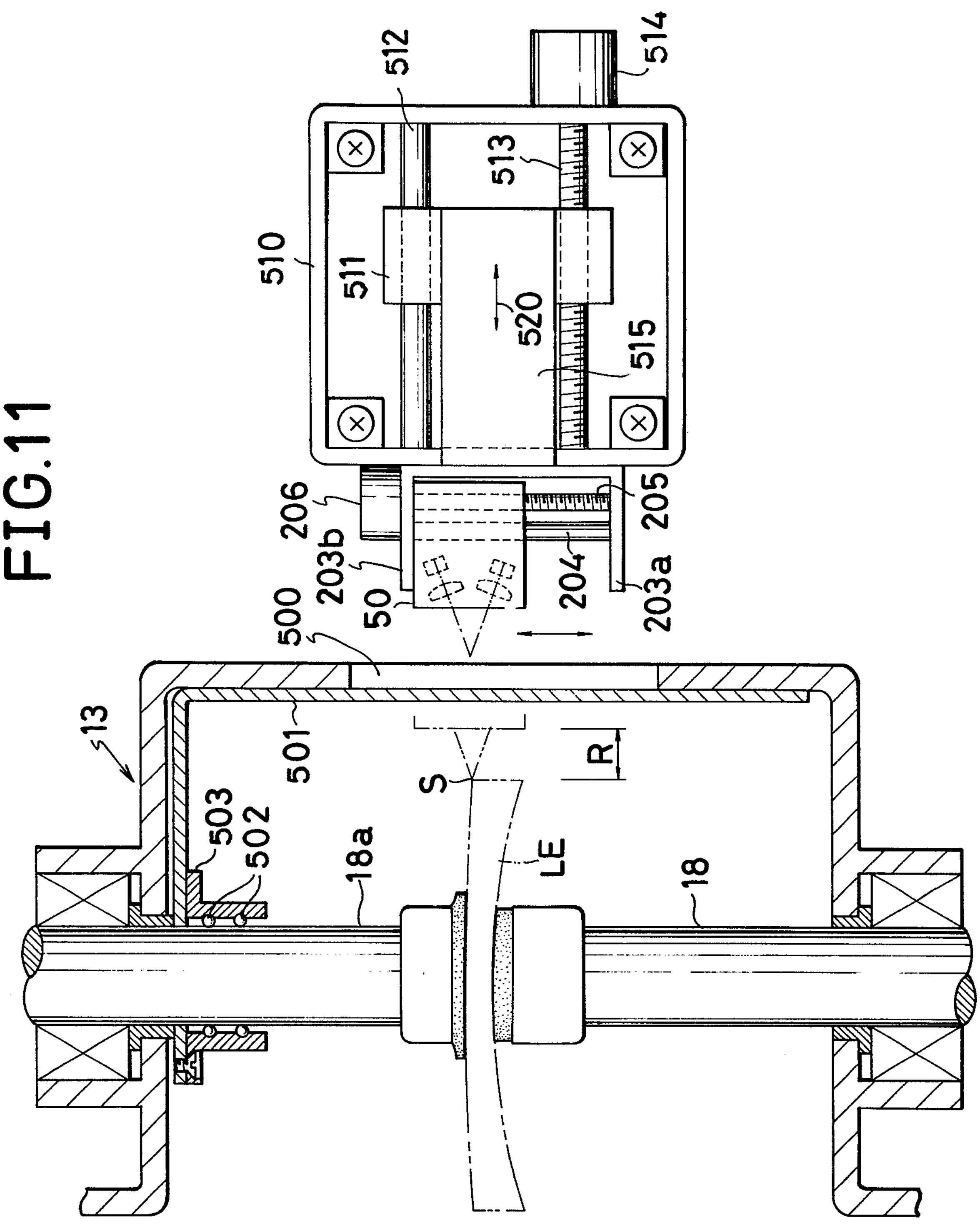

512
514
513
510
511
520
515
206
205
203b
204
50
203a
500
13
501
R
S
503
502
18a
LE
18

FIG.12